# EUROPÄISCHE PATENTSCHRIFT

(11) **EP 0 954 438 B1**
(45) Veröffentlichungstag und Bekanntmachung des Hinweises auf die Patenterteilung: **31.10.2001**
(21) Anmeldenummer: 98907973.6
(22) Anmeldetag: 22.01.1998
(51) Int. Cl.: B32B 27/18, B32B 5/02, E04B 1/88

(54) **MEHRSCHICHTIGE VERBUNDMATERIALIEN, DIE MINDESTENS EINE AEROGELHALTIGE SCHICHT UND MINDESTENS EINE SCHICHT, DIE POLYETHYLENTEREPHTHALAT-FASERN ENTHÄLT, AUFWEISEN, VERFAHREN ZU IHRER HERSTELLUNG SOWIE IHRE VERWENDUNG**
MULTILAYER COMPOSITE MATERIALS WITH AT LEAST ONE AEROGEL-CONTAINING LAYER AND AT LEAST ONE LAYER CONTAINING POLYETHYLENE TEREPHTHALATE FIBRES, PROCESS FOR PRODUCING THE SAME AND THEIR USE
MATERIAUX COMPOSITES A COUCHES MULTIPLES AVEC AU MOINS UNE COUCHE QUI CONTIENT UN AEROGEL ET AU MOINS UNE COUCHE QUI CONTIENT DES FIBRES DE TEREPHTHALATE DE POLYETHYLENE, LEUR PROCEDE DE PRODUCTION ET LEUR UTILISATION

(30) Priorität: 24.01.1997 DE 19702239
(43) Veröffentlichungstag der Anmeldung: 10.11.1999
(73) Patentinhaber: CABOT CORPORATION, Boston, Massachusetts 02210-2019 (US)
(72) Erfinder: SCHWERTFEGER, Fritz, D-60529 Frankfurt am Main (DE); SCHMIDT, Marc, D-60529 Frankfurt am Main (DE); BORGER, Heinz-Werner, D-86399 Bobingen (DE); ADELMANN, Christoph, D-86159 Augsburg (DE); MERGENTHALER, Bettina, D-86845 Grossaitingen (DE)
(74) Vertreter: Luderschmidt, Schüler & Partner GbR
(86) Internationale Anmeldenummer: EP9800330
(87) Internationale Veröffentlichungsnummer: WO9832602

(56) Entgegenhaltungen:
- DE-A- 19 548 128
- DE-A- 19 622 865
- US-A- 4 618 522
- DATABASE WPI Section Ch, Week 9540 Derwent Publications Ltd., London, GB; Class A85, AN 95-306951 XP002068719 & JP 07 203 584 A (YAMAHA CORP)

## Beschreibung

Mehrschichtige Verbundmaterialien, die mindestens eine aerogelhaltige Schicht und mindestens eine Schicht, die Polyethylenterephthalat-Fasern enthält, aufweisen, Verfahren zu ihrer Herstellung sowie ihre Verwendung.

Die Erfindung betrifft neuartige, mehrschichtige Verbundmaterialien beliebiger Formgebung mit sehr hohem Wärmedämmvermögen und/oder Körper- und Trittschalldämmvermögen, Verfahren zu ihrer Herstellung sowie ihre Verwendung.

Konventionelle Wärmedämmstoffe bzw. Körper- und Trittschalldämmstoffe auf Basis von Polystyrol, Polyolefinen und Polyurethanen werden unter Verwendung von Treibmitteln, wie z.B. FCKW's, CO₂ oder Pentan hergestellt. Das in den Zellen des Schaumstoffs eingeschlossene Treibmittel ist für das hohe Dämmvermögen verantwortlich. Derartige Treibmittel belasten jedoch die Umwelt, da sie langsam in die Atmosphäre entweichen.

Aerogele, insbesondere solche mit Porositäten über 60 % und Dichten unter 0,6 g/cm³, sind je nach Herstellungsverfahren transparent, transluzent oder opak und weisen eine äußerst geringe thermische Leitfähigkeit auf. Sie finden deshalb Anwendung als Wärmeisolationsmaterial, wie z. B. in der EP-A-O 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel. Bei der Verwendung des Begriffs Aerogele in der vorliegenden Anmeldung handelt es sich um Aerogele im weiteren Sinn, d.h. im Sinn von "Gel mit Luft als Dispersionsmittel".

Verschiedene Verfahren zur Herstellung von Aerogeien durch über- bzw. unterkritische Trocknung werden z.B. in der EP-A-0 396 076, der WO 92/03378, der WO 94/25149, der WO 92/20623 und der EP-A-0 658 513 offenbart.

Die durch überkritische Trocknung erhaltenen Aerogele sind im allgemeinen hydrophil oder nur kurzzeitig hydrophob, wohingegen unterkritisch getrocknete Aerogele bedingt durch ihre Herstellung (im allgemeinen Silylierung vor der Trocknung) dauerhaft hydrophob sind.

Darüber hinaus lassen sich Aerogele grundsätzlich auch in anorganische und organische Aerogele unterteilen, wobei anorganische Aerogele schon seit 1931 bekannt sind (S.S.Kistler, Nature 1931,127,741), und wohingegen organische Aerogele aus den unterschiedlichsten Ausgangsmaterialien, z.B. aus Melaminformaldehyd, erst seit einigen Jahren bekannt sind (R.W. Pekala, J. Mater. Sci. 1989, 24, 3221).

Desweiteren kann man aerogelhaltige Verbundmaterialien prinzipiell in opake und transparente/transluzente Verbundmaterialien unterteilen. Sie werden vor allem aufgrund ihrer geringen Wärmeleitung als Wärmedämmaterialien eingesetzt.

Opake, aerogelhaltige Verbundmaterialien werden beispielsweise in der EP-A-0 340 707, der EP-A-0 667 370, der WO 96/12683, der WO 96/15997 und der WO 96/15998 offenbart. Diese Verbundmaterialien enthalten zum Teil zwar transparente Aerogel-Granulate, die zusätzlichen Komponenten sind jedoch opak, wodurch die Systeme insgesamt opak sind.

Transparente, aerogelhaltige Verbundmaterialien werden in der deutschen Patentanmeldung 196 34 109.4 beschrieben. Dabei werden Aerogel-Partikel mit Hilfe von transparentem und/oder transluzentem Kunststoff als Bindemittel zu einem beliebigen Formkörper verbunden.

Darüber hinaus wird ein transparenter Aerogel-Verbundstoff in der DE-A-44 30 642 und der DE-A-44 30 669 offenbart. Ein solcher Verbundstoff liegt beispielsweise in Form einer Matte vor, die Aerogel und darin verteilte Fasern enthält, wobei die Aerogel-Bruchstücke durch die Fasern zusammengehalten werden. Obgleich mit solchen transparenten Materialien gute Ergebnisse erzielt wurden, bleiben Nachteile preislicher Art sowie die Notwendigkeit die Systeme in einem Schritt herzustellen.

Ein transparentes Bauelement mit mindestens zwei parallel angeordneten Scheiben aus transparentem Material, in deren Zwischenraum sich faserverstärkte Aerogelplatten bzw. -matten befinden, wird z.B. in der deutschen Patentanmeldung 195 07 732.6 offenbart. Durch diese Maßnahme wird die Stabilität des Systems wesentlich erhöht, der komplizierte Aufbau und der hohe Preis bleiben jedoch bestehen.

Eine Alternative zu den aerogelhaltigen Verbundstoffen wird in der CA-C-1 288 313, der EP-A-018 955 und der DE-A 41 06 192 beschrieben. Gemäß diesen Schriften werden Aerogel-Monolithe zwischen Glasscheiben gebracht, um die Isolationswirkung durch die geringe Wärmeleitfähigkeit des Aerogels zu verbessern und/oder die Schallschwächung solcher Scheiben zu verbessern. Auf diese Weise lassen sich zwar annähernd glasklare, transparente Scheiben erzielen, doch ist wegen der geringen mechanischen Stabilität der Aerogele der Aufwand zur Herstellung entsprechend großer Monolithe zu hoch, um solche Glasscheiben in größerem Umfang einsetzen zu können.

Ferner sind mit Aerogel gefüllte Vakuum Panel Systeme bekannt, wie z.B. in der EP-A-0 468 124, der EP-A- 0 114 687 und der DE-A-33 47 619 offenbart. Der Nachteil der Vakuum Panel Systeme ist jedoch, daß sie nicht mehr nachträglich am Ort der Verwendung in Form oder Größe verändert werden können.

Die oben beschriebenen, literaturbekannten, aerogelhaltigen Verbundmaterialien weisen zwar eine geringe Wärmeleitfähigkeit auf, jedoch muß der Anteil der Aerogel-Partikel sehr hoch sein, um Wärmeleitfähigkeiten < 50 mW/mK zu realisieren. Dadurch sind solche Systeme sehr anfällig gegenüber mechanischer Belastung, was ihre Einsatzfähigkeit sehr einschränkt. Ferner sind sie aufgrund der hohen Kosten, die mit dem Aerogel verbunden sind, sehr teuer, Darüber hinaus werden die Oberflächen solcher Verbundmaterialien und deren Eigenschaften sehr stark vom Aerogel bestimmt, da dieses mehr oder weniger gleichmäßig über das ganze System verteilt ist. Dadurch müssen diese Verbundmaterialien oftmals kaschiert werden, um eine leichtere Verarbeitung mit anderen Komponenten im entsprechenden Anwendungsfeld zu gewährleisten. Damit sind jedoch im allgemeinen zusätzliche Herstellungsschritte verbunden.

Eine Aufgabe der vorliegenden Erfindung war es daher, ein aerogelhaltiges, wärmedämmendes Verbundmaterial zu entwickeln, das einfach, sowie in beliebiger Form und Größe hergestellt werden kann, und nicht die oben beschriebenen Nachteile der aus dem Stand der Technik bekannten Systeme aufweist.

Darüber hinaus war es Aufgabe der vorliegenden Erfindung, ein aerogelhaltiges Verbundmaterial zu entwickeln, das bei gleichem Anteil an Aerogel eine bessere Wärmedämmung, d.h. eine geringere Wärmeleitfähigkeit bzw. bei geringerem Anteil an Aerogel eine vergleichbare Wärmedämmung wie herkömmliche Verbundsysteme aufweist.

Eine weitere Aufgabe der vorliegenden Erfindung war die Bereitstellung eines aerogelhaltigen, wärmedämmenden Verbundmaterials das darüber hinaus auch körper- und/oder trittschalldämmende Eigenschaften besitzt.

Im Rahmen dieser Schrift wird unter Körperschall sich in festen Stoffen ausbreitender Schall verstanden. Unter Trittschall wird der Schall verstanden, der z.B. beim Begehen einer Decke oder Verrücken von Stühlen als Körperschall entsteht und teilweise als Luftschall abgestrahlt wird (Firmenschrift der Rhinolith Dämmstoffe GmbH; Technische Informationen: In 150 Bauphysik 6/96; sowie Reichardt, W.; Grundlagen der technischen Akustik; Akademische Verlagsgesellschaft, Leipzig; 1968).

Die oben beschriebenen Aufgaben werden gelöst durch ein mehrschichtiges Verbundmaterial, das mindestens eine aerogelhaltige Schicht und mindestens eine Schicht, die Polyethylenterephthalat (PET)-Fasern enthält, aufweist.

Das erfindungsgemäße, mehrschichtige Verbundmaterial weist also mindestens zwei, vorzugsweise mindestens drei Schichten auf.

Besonders bevorzugt ist ein Verbundmaterial mit drei Schichten und insbesondere ein Sandwichsystem, bei dem eine aerogelhaltige Schicht zwischen zwei Schichten angeordnet ist, die jeweils PET-Fasern enthalten.

Der Anteil der Aerogel-Partikel in der mindestens einen aerogelhaltigen Schicht sollte im allgemeinen im Bereich von 5 bis 97 Vol.-% liegen.

Bei einem Gehalt an Aerogel-Partikein, der signifikant unter 5 Vol.-% in der mindestens einen aerogelhaltigen Schicht liegt, würde aufgrund des niedrigen Anteils der Aerogel-Partikel im Verbundmaterial deren positive Eigenschaften in hohem Maße verloren gehen. Ein solches Verbundmaterial würde nicht mehr niedrige Dichten und Wärmeleitfähigkeiten aufweisen.

Ein Gehalt an Aerogel-Partikel, der signifikant über 97 Vol.-% liegt, würde zu einem Gehalt an PET-Fasern sowie gegebenenfalls an Bindemittel von unter 3 Vol.-% führen. In diesem Fall wäre deren Anteil zu niedrig, um eine ausreichende Verbindung der Aerogel-Partikel untereinander sowie mechanische Druck- und Biegefestigkeit zu gewährleisten.

In der mindestens einen aerogelhaltigen Schicht liegt der Anteil der Aerogel-Partikel vorzugsweise im Bereich von 40 bis 95 Vol.-% und besonders bevorzugt im Bereich von 60 bis 95 Vol.-%.

Ein besonders hoher Anteil an Aerogel-Partikeln in der mindestens einen aerogelhaltigen Schicht des Verbundmaterials läßt sich durch Verwendung einer bimodalen Verteilung der Korngrößen erreichen. Eine weitere Möglichkeit, einen besonders hohen Anteil an Aerogel-Partikeln in der mindestens einen aerogelhaltigen Schicht des Verbundmaterials zu erreichen, ist die Verwendung von Aerogel-Partikeln, die eine logarithmische Normalverteilung der Korngröße aufweisen.

Um darüber hinaus einen möglichst hohen Füllgrad zu erreichen, ist es ebenfalls günstig, wenn die Aerogel-Partikel klein sind im Verhältnis zur Gesamtdicke der aerogelhaltigen Schicht.

Die Größe der Aerogel-Partikel in der mindestens einen aerogelhaltigen Schicht im Verbundmaterial liegt vorzugsweise im Bereich von 250 µm bis 10 mm, besonders bevorzugt im Bereich von 250 µm bis 5 mm und insbesondere im Bereich von 250 µm bis 2 mm. Die Größe der Aerogel-Partikel bezieht sich dabei auf den mittleren Durchmesser des einzelnen Aerogel-Teilchens, da die Aerogel-Teilchen herstellungsbedingt, beispielsweise durch Mahlen, nicht notwendigerweise eine im wesentlichen sphärische Form aufweisen müssen.

Im allgemeinen verwendete Aerogele für die erfindungsgemäßen Verbundmaterialien sind solche auf Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen, oder solche auf der Basis organischer Stoffe, die für die Sol-Gel-Technik geeignet sind, wie z.B. Melaminformafdehydkondensate (US-A-5,086,085) oder Resorcinformaldehydkondensate (US-A-4,873,218). Die Verbundmaterialien können auch auf Mischungen der oben genannten Materialien basieren. Bevorzugt verwendet werden Aerogele, enthaltend Si-Verbindungen und insbesondere SiO₂-Aerogele.

Zur Reduktion des Strahlungsbeitrags der Wärmeleitfähigkeit kann das Aerogel IR-Trübungsmittel, wie z.B. Ruß, Titandioxid, Eisenoxide oder Zirkondioxid sowie Mischungen derselben, enthalten.

In einer bevorzugten Ausführungsform weisen die Aerogel-Partikel dauerhaft hydrophobe Oberflächengruppen auf. Geeignete Gruppen zur dauerhaften Hydrophobisierung sind beispielsweise Silylgruppen der allgemeinen Formel -Si(R)ₙ, wobei n = 1, 2 oder 3 ist, vorzugsweise trisubstituierte Silylgruppen, wobei die Reste R im allgemeinen unabhängig voneinander, gleich oder verschieden, je ein Wasserstoffatom oder ein nicht reaktiver, organischer, linearer, verzweigter, cyclischer, aromatischer oder heteroaromatischer Rest, vorzugsweise C₁-C₁₈-Alkyl oder C₆-C₁₄-Aryl, besonders bevorzugt C₁-C₆-Alkyl, Cyclohexyl oder Phenyl, insbesondere Methyl oder Ethyl, sind. Besonders vorteilhaft zur dauerhaften Hydrophobisierung des Aerogels ist die Verwendung von Trimethylsilylgruppen. Die Einbringung dieser Gruppen kann, wie z. B. in der WO 94/25149 oder der deutschen Patentanmeldung 196 48 798.6 beschrieben, erfolgen, oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. ller, The Chemistry of Silica, Wiley & Sons, 1979), geschehen. Verglichen mit OH-Gruppen vermindern die so hergestellten hydrophoben Oberflächengruppen weiterhin den dielektrischen Verlustfaktor und die Dielektrizitätskonstante.

Aerogel-Partikel mit hydrophilen Oberflächengruppen können je nach Luftfeuchtigkeit Wasser adsorbieren, was dazu führt, daß die Dielektrizitätskonstante und der dielektrische Verlustfaktor mit der Luftfeuchtigkeit variieren können. Dies ist für elektronische Anwendungen oft nicht erwünscht. Die Verwendung von Aerogel-Partikeln mit hydrophoben Oberflächengruppen verhindert diese Variation, da kein Wasser adsorbiert wird. Die Auswahl der Reste richtet sich außerdem nach der typischen Anwendungstemperatur.

Werden Aerogel-Partikel mit hydrophoben Oberflächengruppen in Verbindung mit hydrophoben PET-Fasern sowie gegebenenfalls hydrophoben Bindemitteln verwendet, erhält man ein hydrophobes Verbundmaterial.

Darüber hinaus gilt, daß die thermische Leitfähigkeit der Aerogele mit zunehmender Porosität und abnehmender Dichte abnimmt. Bevorzugt sind deshalb Aerogele mit Porositäten über 60 % und Dichten unter 0,6 g/cm³. Besonders bevorzugt sind Aerogele mit Dichten unter 0,2 g/cm³, und insbesondere Aerogele mit Dichten zwischen 0,16 und 0,10 g/cm³.

In einer besonderen Ausführungsform, kann die mindestens eine Schicht, die PET-Fasern enthält, zusätzlich auch Aerogel-Partikel enthalten, wobei hier der Anteil vorzugsweise im Bereich von 0 bis 40 Vol.-% liegt und die gleichen Aerogele in Frage kommen wie für die mindestens eine aerogelhaltige Schicht.

In einer weiteren Ausführungsform kann die mindestens eine aerogelhaltige Schicht und/oder die mindestens eine Schicht, die PET-Fasern enthält, zusätzlich mindestens ein Bindemittel enthalten.

Das Bindemittel bildet dabei eine Matrix, die die Aerogel-Partikel und/oder die PET-Fasern verbindet bzw. umschließt und sich als durchgehende Phase durch das gesamte Verbundmaterial, vorzugsweise zumindest durch die mindestens eine aerogelhaltige Schicht, ziehen kann.

Als Bindemittel für die erfindungsgemäßen Verbundmaterialien werden im allgemeinen Dispersionsklebstoffe, wie z.B. Mowilith®, oder Polyvinylbutyrale, wie z.B. Mowital®, verwendet.

Das Bindemittel wird in den einzelnen Schichten im allgemeinen in einer Menge von 3 bis 95 Vol.-% verwendet, vorzugsweise in einer Menge von 3 bis 60 Vol.-%, besonders bevorzugt in einer Menge von 3 bis 40 Vol.-% und insbesondere in einer Menge von 3 bis 20 Vol.-%.

Desweiteren kann die mindestens eine aerogelhaltige Schicht des Verbundmaterials auch noch bis zu 50 Vol.-% Füllstoffe, wie z. B. Holzmehl, Asbest und bevorzugt Cellulose, beispielsweise zur Verbesserung der mechanischen Eigenschaften, enthalten. Vorzugsweise liegt der Anteil der Füllstoffe im Bereich von 0 bis 20 Vol.-%.

Als Polyethylenterephthalat (PET)-Fasern kommen PET-Homopolymere, PET-Copolymere, PET-Compounds, PET-Recyklat sowie andere PET-Variationen in Frage, wobei Recyklat bevorzugt ist.

Die PET-Fasern können auch beschichtet sein, beispielsweise metallisiert mit einem Metall wie Aluminium.

Die Fasern können glatt oder gekräuselt als Einzelfasern, als Bausch oder als Faservlies oder -gewebe vorliegen. Faservliese und/oder -gewebe können dabei als zusammenhängendes Ganzes und/oder in Form mehrerer kleiner Stücke in dem Verbundstoff enthalten sein.

Die Fasern können runde, trilobale, pentalobale, oktalobale, bändchen-, tannenbaum-, hantel- oder andere sternförmige Profile aufweisen. Ebenso können auch Hohlfasern verwendet werden.

Im allgemeinen werden Fasern mit einem Durchmesser zwischen 0,1 µm und 5 mm verwendet. Typischerweise führt bei festem Volumenanteil von Fasern die Verwendung geringerer Durchmesser zu bruchfesteren Verbundmaterialien. Durch Wahl von sehr dünnen Fasern wird der Verbundstoff leichter biegsam. Bevorzugt sind deshalb Faserdurchmesser im Bereich von 0,1 bis 30 µm.

Die Länge der Fasern ist in keinster Weise beschränkt. Durch Länge und Verteilung der Fasern im Verbundmaterial kann jedoch dessen mechanische Festigkeit beeinflußt werden. Deshalb werden bevorzugt Fasern eingesetzt, deren Länge zwischen 0,5 und 10 cm liegt.

Weiter können Mischungen der oben genannten Typen benutzt werden.

Ferner sollte die Wärmeleitfähigkeit des Fasermaterials vorzugsweise < 1 W/mK sein.

Durch geeignete Wahl von Faserdurchmesser und/oder -material kann der Strahlungsbeitrag zur Wärmeleitfähigkeit reduziert und eine größere mechanische Festigkeit erzielt werden.

Der Strahlungsbeitrag zur Wärmeleitfähigkeit kann weiter dadurch reduziert werden, daß z.B. mit Ruß geschwärzte PET-Fasern, verwendet werden.

Die Fasern können zur besseren Anbindung an die Matrix noch mit Schlichten oder Kontaktvermittlern (coupling agents) beschichtet sein.

Ferner ist es vorteilhaft, wenn die mindestens eine PET-faserhaltige Schicht noch Luftanteile enthält, das heißt nicht vollständig zusammengepreßt ist, da sich durch die Kombination der Wärmeleitfähigkeiten von Faser und Luft eine geringere Wärmeleitfähigkeit ergibt.

Auch die mindestens eine aerogelhaltige Schicht des Verbundmaterials kann zusätzlich PET-Fasern enthalten, wobei als PET-Fasermaterial die gleichen Fasern in Frage kommen, wie für die mindestens eine PET-faserhaltige Schicht. Der Zusatz an Fasern ist insbesondere für thermische Anwendungen und im Hinblick auf Rißbildung und Bruchfestigkeit vorteilhaft.

Der Durchmesser der in der mindestens einen aerogelhaltigen Schicht verwendeten Fasern sollte vorzugsweise kleiner als der mittlere Durchmesser der Aerogel-Partikel sein, um einen hohen Aerogel-Anteil in dieser Schicht zu ermöglichen. Die Länge der Fasern in der mindestens einen aerogelhaltigen Schicht sollte vorzugsweise größer als der mittlere Durchmesser der Aerogel-Partikel sein.

Die Stabilität wie auch die Wärmeleitfähigkeit der mindestens einen aerogelhaltigen Schicht des Verbundmaterials nimmt mit steigendem Faseranteil zu. Um eine signifikante Erhöhung der Wärmeleitfähigkeit durch die zugegebenen Fasern in dieser mindestens einen Schicht zu vermeiden, sollte der Volumenanteil der Fasern vorzugsweise zwischen 0,1 und 40 Vol.-% liegen, besonders bevorzugt im Bereich zwischen 0,1 und 15 Vol.-%.

Gegenüber einer Schicht, die nur aus Aerogel-Partikeln besteht, die über ihre Oberflächen verbunden oder in eine Bindemittelmatrix eingelagert sind, führen überraschenderweise schon geringe Volumenanteile von Fasern bei gleichem Volumenanteil von Bindemitteln zu einer wesentlichen mechanischen Verstärkung, da sie wesentliche Teile der Last übernehmen. Wird ein höherer Volumenanteil Fasern verwendet und nur wenig Bindemittel so kann eine poröse Schicht erhalten werden, in der die durch die Bindemittel verbundenen Fasern ein mechanisch stabiles Gerüst bilden, in das die Aerogel-Partikel eingelagert sind. Die dann auftretenden Luftporen führen zu einer höheren Porosität und damit verbesserten Schalldämpfung.

Durch das Bindemittel werden entweder die Fasern und/oder die Aerogele untereinander sowie gegebenenfalls miteinander verbunden oder aber das Bindemittel dient als Matrixmaterial, in das die Fasern und/oder die Aerogel-Partikel eingebettet sind.

Darüber hinaus können in der mindestens einen aerogelhaltigen Schicht des Verbundmaterials in geringen Mengen noch Gleitmittel, wie z. B. Zinkstearat, Pigmente, wie z. B. Titandioxid, Weichmacher, wie z. B. Glycerin und o,p-Toluolsulfonamid und/oder saure bzw. säureabspaltende Härtungsbeschleuniger enthalten sein.

Weiterhin können auch sogenannte "coupling agents" eingesetzt werden. Sie bewirken einen besseren Kontakt des Bindemittels mit der Oberfläche der Aerogel-Partikel und können darüber hinaus eine feste Bindung sowohl mit den Aerogel-Partikeln als auch mit dem Bindemittel eingehen.

Wird das Material in Form von flächigen Gebilden, wie z.B. Platten oder Matten, verwendet, kann es auf mindestens einer Seite mit mindestens einer Deckschicht kaschiert sein, um die Eigenschaften der Oberfläche zu verbessern, so z.B. die Robustheit zu erhöhen, sie als Dampfsperre auszubilden oder gegen leichte Verschmutzbarkeit zu schützen. Die Deckschichten können auch die mechanische Stabilität des Verbundstoff-Formteils verbessern. Werden auf beiden Flächen Deckschichten verwendet, so können diese gleich oder verschieden sein. Die Dicke der Deckschicht(en) sollte im allgemeinen dünner als 100 *µ*m sein.

Als Deckschichten eignen sich alle dem Fachmann bekannten Materialien. Sie können nicht-porös sein und damit als Dampfsperre wirken, wie z.B. Kunststoffolien, vorzugsweise Metallfolien oder metallisierte Kunststoffolien, die Wärmestrahlung reflektieren. Es können aber auch poröse Deckschichten verwendet werden, die ein Eindringen von Luft in das Material ermöglichen und damit zu einer besseren Schalldämpfung führen, wie z.B. poröse Folien, Papiere, Gewebe oder Vliese.

Die Deckschichten können selbst auch aus mehreren Schichten bestehen. Die Deckschichten können mit dem Bindemittel befestigt sein, durch das die Fasern und die Aerogel-Partikel untereinander und miteinander verbunden sind, es kann aber auch ein anderer Kleber Verwendung finden.

Weiterhin kann die mechanische Festigkeit des erfindungsgemäßen, mehrschichtigen Verbundmaterials durch Auflaminieren von Siebgeweben oder Folien auf die Plattenoberfläche verbessert werden. Die Siebgewebe oder Folien können sowohl nachträglich als auch bei der Herstellung des Verbundmaterials aufgebracht werden. Letzteres ist bevorzugt und kann beispielsweise in einem Arbeitsschritt durch Einlegen der Siebgewebe oder Folien in die Preßform und Auflegen auf die zu verpressende aerogelhaltige Preßmasse und anschließendes Verpressen unter Druck und Temperatur zu einer aerogelhaltigen Verbundplatte erfolgen.

Die Dicke der mindestens einen PET-faserhaltigen Schicht beträgt im allgemeinen mehr als 100 *µ*m, vorzugsweise mindestens 500 *µ*m und insbesondere mindestens 1 mm. Trotzdem sollten diese Schichten jedoch dünn sein, insbesondere im Vergleich zu der mindestens einen aerogelhaltigen Schicht, damit die Gesamtwärmeleitfähigkeit des Verbundmaterials möglichst gering ist. Zur Reduktion des Strahlungsbeitrags der Wärmeleitfähigkeit kann das Verbundmaterial IR-Trübungsmittel, wie z.B. Ruß, Titandioxid, Eisenoxide oder Zirkondioxid sowie Mischungen derselben enthalten, was besonders für Anwendungen bei hohen Temperaturen vorteilhaft ist.

Sollte das Verbundmaterial aufgrund der verwendeten Polyethylenterephthalatfasern bzw. Bindemittel und/oder aufgrund von hydrophilen Aerogel-Partikeln hydrophil sein, kann gegebenenfalls eine nachträgliche Behandlung erfolgen, die dem Verbundmaterial hydrophobe Eigenschaften verleiht. Dazu eignen sich alle dem Fachmann für diesen Zweck bekannten Stoffe, die dem Verbundmaterial eine hydrophobe Oberfläche verleihen, wie z. B. Lacke, Folien, Silylierungsmittel, Silikonharze sowie anorganische und/oder organische Bindemittel.

Die erfindungsgemäßen, mehrschichtigen Verbundmaterialien weisen vorzugsweise eine Dichte von weniger als 0,6 g/cm³ und vorzugsweise eine Wärmeleitfähigkeit von weniger als 100 mW/mK auf. Besonders bevorzugt liegt die Wärmeleitfähigkeit unter 50 mW/mK und insbesondere im Bereich von 15 bis 40 mW/mK.

Die Brandklasse des nach der Trocknung erhaltenen Verbundmaterials wird durch die Brandklasse des Aerogels und/oder der anderen Bestandteile bestimmt. Um eine möglichst günstige Brandklasse des Verbundmaterials zu erhalten (schwer entflammbar oder unbrennbar), verwendet man bevorzugt Materialien, die schwer entflammbar sind.
Darüber hinaus können zur Erreichung einer möglichst günstigen Brandklasse alle dem Fachmann bekannten Materialien sowie Verfahren (wie z.B. Brandschutzfarben, -lacke, Folien und Kaschierungen) eingesetzt werden.

Zur Herstellung der erfindungsgemäßen Verbundmaterialien als mehrschichtige Systeme können alle dem Fachmann bekannten Methoden und Verfahren angewendet werden.

Bevorzugt wird die mindestens eine aerogelhaltige und die mindestens eine Schicht, die PET-Fasern enthält, entweder gleichzeitig in einem Schritt hergestellt und miteinander verbunden oder getrennt hergestellt und anschließend miteinander verbunden. Das Verbinden kann dabei mittels mindestens einem separaten Bindemittel oder durch die in der mindestens einen aerogelhaltigen und/oder mindestens einen PET-faserhaltigen Schicht verwendeten Bindemittel erfolgen.

In der mindestens einen aerogelhaltigen Schicht können die Aerogel-Partikel mittels mindestens einem Bindemittel miteinander verbunden werden. Die Verbindung der einzelnen Partikel miteinander kann dabei quasi punktförmig erfolgen. Eine solche oberflächliche Beschichtung kann beispielsweise durch Besprühen der Aerogel-Partikel mit dem Bindemittel erreicht werden. Die beschichteten Partikel werden dann beispielsweise in eine Form eingefüllt und in der Form ausgehärtet.

In einer bevorzugten Ausführungsform wird zusätzlich auch das Zwickelvolumen zwischen den einzelnen Partikeln ganz oder teilweise vom Bindemittel ausgefüllt. Eine solche Zusammensetzung läßt sich beispielsweise herstellen, indem man die Aerogel-Partikel und gegebenenfalls die Fasern mit dem Bindemittel mischt.

Das Mischen kann dabei in jeder nur denkbaren Weise durchgeführt werden. So ist es einerseits möglich, die mindestens zwei Komponenten gleichzeitig in die Mischvorrichtung einzubringen, andererseits kann aber auch eine der Komponenten vorgelegt und die andere(n) dann zugesetzt werden.

Auch die für das Mischen notwendige Mischvorrichtung ist in keinster Weise beschränkt. Es kann jede dem Fachmann für diesen Zweck bekannte Mischvorrichtung verwendet werden.

Der Mischvorgang wird solange durchgeführt, bis eine annähernd gleichmäßige Verteilung der Aerogel-Partikel in der Zusammensetzung vorliegt. Dabei kann der Mischvorgang sowohl über die Zeitdauer, als auch beispielsweise über die Geschwindigkeit der Mischvorrichtung geregelt werden.

Danach erfolgt die Formgebung und das Aushärten des Gemisches in der Form, bei Verwendung von Dispersionsklebstoffen durch Erwärmen und/oder Verdampfen des verwendeten Dispersionsmittels, oder aber bei Verwendung von Polyvinylbutyralen durch Abkühlen unter die Schmelztemperatur des Bindemittels.

In einer bevorzugten Ausführungsform wird das Gemisch verpreßt. Dabei ist es dem Fachmann möglich, für den jeweiligen Anwendungszweck die geeignete Presse und das geeignete Preßwerkzeug auszuwählen. Aufgrund des hohen Luftanteils des aerogelhaltigen Verbundmaterials ist der Einsatz von Vakuum-Pressen vorteilhaft. In einer bevorzugten Ausführungsform werden die aerogelhaltigen Verbundmaterialien zu Platten verpreßt. Dabei kann die mindestens eine PET-faserhaltige Schicht direkt mit verpreßt werden.

Um ein Anbacken der Preßmasse an die Preßstempel zu vermeiden, kann das zu verpressende Gemisch mit Trennpapier gegen die Preßstempel abgetrennt werden. Die mechanische Festigkeit der Verbundmaterialien kann durch Auflaminieren von Siebgeweben, Vliesen oder Papieren auf die Oberfläche verbessert werden, Die Siebgewebe, Vliese bzw. Papiere können sowohl nachträglich auf die Platten aufgebracht werden, wobei die Siebgewebe, Vliese bzw. Papiere zuvor beispielsweise mit Melaminharzen imprägniert werden können und dann in einer beheizbaren Presse unter Druck mit den Plattenoberflächen verbunden werden, als auch, in einer bevorzugten Ausführungsform, in einem Arbeitsschritt durch Einlegen der Siebgewebe, Vliese bzw. Papiere, die gegebenenfalls zuvor mit Melaminharz imprägniert werden können, in die Preßform und Auflegen auf die zu verpressende Preßmasse und anschließend unter Druck und Temperatur zu einer Verbundplatte verpresst werden.

Das Verpressen findet in Abhängigkeit vom verwendeten Bindemittel im allgemeinen bei Pressdrücken von 1 bis 1000 bar und Temperaturen von 0 bis 300°C in beliebigen Formen statt.

Die PET-faserhaltigen Schichten können analog zu den aerogelhaltigen Schichten hergestellt werden.

Bei Verbundmaterialien, die einen besonders hohen Volumenanteil an Aerogel-Partikeln enthalten und deren Wärmeleitfähigkeit entsprechend schlecht ist, kann zusätzlich mit Hilfe geeigneter Strahlungsquellen Wärme in die Platten gebracht werden. Koppelt, wie z. B. im Falle von Polyvinylbutyralen, das verwendete Bindemittel mit Mikrowellen, so ist diese Strahlungsquelle bevorzugt.

Die erfindungsgemäßen Verbundmaterialien eignen sich nach ihrer Härtung aufgrund ihrer geringen Wärmeleitfähigkeit als Wärmeisolationsmaterialien.

Weiterhin eignen sich die Verbundmaterialien als Schalldämmaterialien, vorzugsweise zur Körper- bzw. Trittschalldämmung.

Die Erfindung wird im folgenden anhand von Ausführungsbeispielen näher beschrieben, ohne dadurch beschränkt zu werden.

Die hydrophoben Aerogele wurden analog dem in der DE-A-43 42 548 offenbarten Verfahren hergestellt.

Die Wärmeleitfähigkeiten der Aerogel-Granulate wurden mit einer Heizdrahtmethode (siehe z.B. O. Nielsson, G. Rüschenpöhler, J. Groß, J. Fricke, High Temperatures - High Pressures, Vol. 21, 267 - 274 (1989)) gemessen.

Die Wärmeleitfähigkeiten der Formkörper wurden nach DIN 52612 gemessen.

Als Maß für die Verbesserung der Körper- bzw. Trittschalldämmung wurde das Trittschallverbesserungsmaß nach DIN 52210 bestimmt.

### Beispiel 1

### Formkörper aus Aerogel, Polyvinylbutyral und PET-Recyclingfasern

Es werden 80 Vol.-% hydrophobes Aerogel-Granulat und 20 Vol.-% Polyvinylbutyralpulver Mowital® (Polymer F) innig vermischt. Das hydrophobe Aerogel-Granulat hat eine Korngröße kleiner 500 µm, eine Schüttdichte von 75 kg/m³, eine BET-Oberfläche von 640 m²/g und eine Wärmeleitfähigkeit von 11 mW/mK.

Der Boden und der Deckel der Preßform mit einer Grundfläche von 30 cm x 30 cm wird mit Trennpapier ausgelegt. Auf dem Boden werden so viel grob aufgeschlossene PET-Faserreste als Recyclingfasern verteilt (gemischt mit 2 Gew.% Polyvinylbutyralpulver), daß sich durch das anschließende Pressen eine 2 mm dicke Schicht aus PET-Faserresten bildet. Darauf wird die aerogelhaltige Preßmasse gleichmäßig verteilt und noch einmal soviel grob aufgeschlossene PET-Faserreste als Recyclingfasern verteilt (gemischt mit 2 Gew.% Polyvinylbutyralpulver) darauf gegeben, daß sich auch oben nach dem Pressen eine 2 mm dicke Schicht aus PET-Faserresten bildet. Anschließend wird bei 220°C für 30 Minuten auf eine Dicke von 9 mm gepreßt.

Der erhaltene Formkörper hat eine Dichte von 250 kg/m³ und eine Wärmeleitfähigkeit von 45 mW/mK. Das Trittschallverbesserungsmaß beträgt 16 dB.

### Vergleichsbeispiel 1:

### Formkörper aus Aerogel, Polyvinylbutyral und PET-Recyclingfasern

Es werden 50 Vol.-% hydrophobes Aerogel-Granulat, 10 Vol.-% Polyvinylbutyralpulver Mowital® (Polmyer F) und 40 Vol.-% PET-Fasern innig vermischt.

Der Boden und der Deckel der Preßform mit einer Grundfläche von 30 cm x 30 xm wird mit Trennpapier ausgelegt. Darauf wird die aerogelhaltige Preßmasse gleichmäßig verteilt. Anschließend wird bei 220°C für 30 Minuten auf eine Dicke von 9 mm gepreßt.

Der erhaltene Formkörper hat eine Dichte von 255 kg/m³ und eine Wärmeleitfähigkeit von 50 mW/mK. Das Trittschallverbesserungsmaß beträgt 13 dB.

### Vergleichsbeispiel 2:

### Formkörper aus Polyvinylbutyral und PET-Recyclingfasern

Es werden 95 Vol.-% PET-Recyclingfasern und 5 Vol.-% Polyvinylbutyralpulver Mowital® (Polymer F) innig vermischt.

Der Boden und der Deckel der Preßform mit einer Grundfläche von 30 cm x 30 cm wira mit Trennpapier ausgelegt. Darauf wird die Preßmasse gleichmäßig verteilt. Anschließend wird bei 190°C für 20 Minuten auf eine Dicke von 9 mm gepreßt.

Der erhaltene Formkörper hat eine Dichte von 230 kg/m³ und eine Wärmeleitfähigkeit von 84 mW/mK. Das Trittschallverbesserungsmaß beträgt 8 dB.

## Patentansprüche

1. Mehrschichtiges Verbundmaterial, das mindestens eine aerogelhaltige Schicht und mindestens eine Schicht die Polyethylenterephthalat (PET)-Fasern enthält, aufweist.

2. Verbundmaterial gemäß Anspruch 1, **dadurch gekennzeichnet, daß** es mindestens drei Schichten aufweist.

3. Verbundmaterial gemäß Anspruch } oder 2, **dadurch gekennzeichnet, daß** es eine Sandwichstruktur aufweist, bei der eine aerogelhaltige Schicht zwischen zwei Schichten angeordnet ist, die jeweils PET-Fasern enthalten,

4. Verbundmaterial gemäß mindestens einem der vorhergehenden Ansprüche, **dadurch gekennzeichnet, daß** der Anteil der Aerogel-Partikel in der mindestens einen aerogelhaltigen Schicht im Bereich von 5 bis 97 Vol.-% liegt.

5. Verbundmaterial gemäß mindestens einem der vorhergehenden Ansprüche, **dadurch gekennzeichnet, daß** die Größe der Aerogel-Partikel im Bereich von 250 µm bis 10 mm liegt.

6. Verbundmaterial gemäß mindestens einem der vorhergehenden Ansprüche, **dadurch gekennzeichnet, daß** als Aerogel-Partikel solche die Si-Verbindungen enthalten, vorzugsweise SiO₂-Aerogele, verwendet werden.

7. Verbundmaterial gemäß mindestens einem der vorhergehenden Ansprüche, **dadurch gekennzeichnet, daß** das Verbundmaterial und/oder die Aerogel-Partikel IR-Trübungsmittel enthält.

8. Verbundmaterial gemäß mindestens einem der vorhergehenden Ansprüche, **dadurch gekennzeichnet, daß** die Aerogei-Partikel dauerhaft hydrophobe Oberflächengruppen aufweisen.

9. Verbundmateriai gemäß mindestens einem der vorhergehenden Ansprüche, **dadurch gekennzeichnet, daß** die Aerogel-Partikel Porositäten über 60 % und Dichten unter 0,6 g/cm³ aufweisen.

10. Verbundmaterial gemäß mindestens einem der vorhergehenden Ansprüche, **dadurch gekennzeichnet, daß** mindestens eine Schicht, die PET-Fasern enthält, zusätzlich auch Aerogel-Partikel enthält.

11. Verbundmaterial gemäß mindestens einem der vorhergehenden Ansprüche, **dadurch gekennzeichnet, daß** die mindestens eine aerogelhaltige Schicht und/oder die mindestens eine Schicht, die PET-Fasern enthält, zusätzlich mindestens ein Bindemittel enthält.

12. Verbundmaterial gemäß Anspruch 11, **dadurch gekennzeichnet, daß** als Bindemittel Dispersionsklebstoffe oder Polyvinylbutyrale verwendet werden.

13. Verbundmaterial gemäß mindestens einem der vorhergehenden Ansprüche, **dadurch gekennzeichnet, daß** die mindestens eine aerogelhaltige Schicht bis zu 50 Vol.-% Füllstoffe enthält.

14. Verbundmaterial gemäß mindestens einem der vorhergehenden Ansprüche, **dadurch gekennzeichnet, daß** die mindestens eine aerogelhaltige Schicht zusätzlich PET-Fasern enthält.

15. Verbundmaterial gemäß mindestens einem der vorhergehenden Ansprüche, **dadurch gekennzeichnet, daß** es eine Wärmeleitfähigkeit von weniger als 100 mW/mK aufweist.

16. Verwendung eines Verbundmaterials gemäß mindestens einem der Ansprüche 1 bis 15 zur Wärme- und/oder Schalldämmung.

## Claims

1. A multi-layer composite material which contains at least one aerogel-containing layer and at least one layer which contains polyethylene terephthalate (PET)fibres.

2. A composite material according to claim 1, **characterised in that** it comprises at least three layers.

3. A composite material according to claim 1 or 2, **characterised in that** it has a sandwich structure in which an aerogel-containing layer is disposed between two layers which each contain PET fibres.

4. A composite material according to at least one of the preceding claims, **characterised in that** the proportion of aerogel particles in the at least one aerogel-containing layer is in the range from 5 to 97% by volume.

5. A composite material according to at least one of the preceding claims, **characterised in that** the size of the aerogel particles is in the range from 250 µm to 10 mm.

6. A composite material according to at least one of the preceding claims, **characterised in that** preferably SiO₂ aerogels are used as aerogel particles such as contain Si-compounds.

7. A composite material according to at least one of the preceding claims, **characterised in that** the composite material and/or the aerogel particles contain infra-red opacifiers.

8. A composite material according to at least one of the preceding claims, **characterised in that** the aerogel particles have permanently hydrophobic surface groups.

9. A composite material according to at least one of the preceding claims, **characterised in that** the aerogel particles have porosities above 60% and densities below 0.6 g/cu.cm.

10. A composite material according to at least one of the preceding claims, **characterised in that** at least one layer which contains PET fibres additionally contains aerogel particles.

11. A composite material according to at least one of the preceding claims, **characterised in that** the at least one aerogel-containing layer and/or the at least one layer which contains PET fibres additionally contains at least one binder.

12. A composite material according to claim 11, **characterised in that** dispersion adhesives or polyvinyl butyrols are used as binders.

13. A composite material according to at least one of the preceding claims, **characterised in that** the at least one aerogel-containing layer contains up to 50% by volume of fillers.

14. A composite material according to at least one of the preceding claims, **characterised in that** the at least one aerogel-containing layer additionally contains PET fibres.

15. A composite material according to at least one of the preceding claims, **characterised in that** it has a heat conductivity of less than 100 mW/mK.

16. Use of a composite material according to at least one of claims 1 to 15 for heat and/or sound insulation.

## Revendications

1. Matériau composite multicouche qui présente au moins une couche contenant un aérogel et au moins une couche contenant des fibres de polyéthylènetéréphtalate (PET).

2. Matériau composite selon la revendication 1, **caractérisé en ce qu'**il présente au moins 3 couches.

3. Matériau composite selon la revendication 1 ou 2, **caractérisé en ce qu'**il présente une structure sandwich, dans laquelle une couche contenant l'aérogel est disposée entre deux couches qui contiennent chacune des fibres de PET.

4. Matériau composite selon au moins l'une des revendications précédentes, **caractérisé en ce que** le taux des particules d'aérogel dans l'au moins une couche contenant l'aérogel est situé dans le domaine de 5 à 97 % volumiques.

5. Matériau composite selon au moins l'une des revendications précédentes, **caractérisé en ce que** la taille des particules d'aérogel est située dans le domaine de 250 µm à 10 mm.

6. Matériau composite selon au moins l'une des revendications précédentes, **caractérisé en ce qu'**on utilise en tant que particules d'aérogel de telles qui contiennent des composés de Si, de préférence des aérogels de SiO₂.

7. Matériau composite selon au moins l'une des revendications précédentes, **caractérisé en ce que** le matériau composite et/ou les particules d'aérogel contiennent un opacifiant d'IR.

8. Matériau composite selon au moins l'une des revendications précédentes, **caractérisé en ce que** les particules d'aérogel présentent des groupes superficiels durablement hydrophobes.

9. Matériau composite selon au moins l'une des revendications précédentes, **caractérisé en ce que** les particules d'aérogel présentent des porosités supérieures à 60 % et des masses volumiques inférieures à 0,6 g/cm³.

10. Matériau composite selon au moins l'une des revendications précédentes, **caractérisé en ce que** au moins une couche qui contient des fibres de PET, contient de plus des particules d'aérogel également.

11. Matériau composite selon au moins l'une des revendications précédentes, **caractérisé en ce que** l'au moins une couche contenant l'aérogel et/ou l'au moins une couche contenant des fibres de PET, contiennent de plus un liant.

12. Matériau composite selon la revendication 11, **caractérisé en ce qu'**on utilise comme liant des colles en dispersion ou des poly(butyrals de vinyle).

13. Matériau composite selon au moins l'une des revendications précédentes, **caractérisé en ce que** l'au moins une couche contenant l'aérogel contient jusqu'à 50 % volumiques de charges.

14. Matériau composite selon au moins l'une des revendications précédentes, **caractérisé en ce que** l'au moins une couche contenant l'aérogel contient de plus des fibres de PET.

15. Matériau composite selon au moins l'une des revendications précédentes, **caractérisé en ce qu'**il présente une conductivité thermique inférieure à 100 mW/mK.

16. Utilisation d'un matériau composite selon au moins l'une des revendications 1 à 15 pour l'isolation thermique et/ou phonique.
